(19)

Europäisches
Patentamt
European
Patent Office
Office européen
des brevets

(11) **EP 2 530 991 A1**

(12) **EUROPEAN PATENT APPLICATION**

(43) Date of publication:
**05.12.2012 Bulletin 2012/49**

(51) Int Cl.:
***H04W 72/12*** (2009.01)

(21) Application number: **11290247.3**

(22) Date of filing: **31.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventor: **Wild, Thorsten
70435 Stuttgart (DE)**

(74) Representative: **Kleinbub, Oliver et al
Alcatel-Lucent Deutschland AG
Intellectual Property & Standards
Lorenzstrasse 10
70435 Stuttgart (DE)**

(54) **A method for transmission of data, a base station and a user terminal therefor**

(57) The invention concerns a method for transmission of data between a base station (BS) and a user terminal (UE), wherein a point in time for a start of the transmission of said data is determined dependent on a transmission delay tolerance of said data, a base station and a user terminal therefor.

Fig. 4

## Description

### Field of the invention

The invention relates to a method for transmission of data between a base station and a user terminal, and a base station and a user terminal adapted to perform said method.

### Background

In cellular communication networks using standards like e.g. Third Generation Partnership Project Long Term Evolution (3GPP LTE) standard, transmission bandwidth is limited, especially at certain times during the day, where the base stations reach their peak loads.

The increasing amount of data hungry devices, like smart-phones, is causing a lot of traffic, however, the user does not take care of this problem, because he pays a flat rate price.

The problem even gets worse when the data-hungry user is in poor radio conditions, with e.g. a low signal-to-interference-plus-noise ratio (SINR), or a low channel quality indicator (CQI), and thus will eat up large amounts of radio resources to the disadvantage of other users.

### Summary

The object of the invention is thus to propose a method for transmission of data between a base station and a user terminal which allows an appropriate and fair distribution of radio resources to the user terminals.

According to the prior art, a base station has a scheduler which cares for scheduling its radio traffic e.g. according to best effort scheduling which does not provide any guarantees that data is delivered or that a user is given a guaranteed quality of service level or a certain priority.

The disadvantage of such a best effort scheduling is, that a data-hungry user will eat up large amounts of radio resources to the disadvantage of other users regardless of the fact that its data traffic might have very low urgency.

Some portion of the data traffic is extremely high delay-tolerant in conjunction with large amounts of data to be transferred, like e.g. operation system software updates, application software updates, update of navigation system maps, or other forms of software updates. Such delay-tolerant traffic could be delayed even for many hours to fit a suitable time, e.g. when the cell load has decreased and/or the user terminal is in good radio conditions.

According to the invention, a new method for transmission of data between a base station and a user terminal is proposed, which directly enables a type of traffic which could be described as currently nice to have, but can be done at any time during the next k hours.

Mobile applications, which intend to communicate with an appropriate high delay-tolerant traffic type, notify the base station preferably via a local client software, and the base station triggers the start of the data transmission dependent on the transmission delay tolerance of the data.

The base station may further take into account the radio conditions of the cell and the user terminal, as e.g. signal to interference and noise ratio (SINR) or channel quality indication (CQI) for the decision when to start the transmission of data. The base station may also take into account available time to wait for good conditions, as e.g. low load and/or high expected throughput, using also its statistical knowledge of expected data traffic, e.g. based on averaged daily data traffic distribution. Then the base station finally decides when a transmission should be made based on said radio conditions.

The object is thus achieved by a method for transmission of data between a base station and a user terminal, wherein a point in time for a start of the transmission of said data is determined dependent on a transmission delay tolerance of said data.

The object is furthermore achieved by a base station for transmission of data between said base station and a user terminal, wherein the base station comprises at least one processing means which is adapted to determine a point in time for a start of the transmission of said data dependent on a transmission delay tolerance of said data.

The object is furthermore achieved by a user terminal for transmission of data between said user terminal and a base station, wherein the user terminal comprises at least one processing means which is adapted to notify the base station about a transmission delay tolerance of said data, and to receive a trigger to start the transmission of said data.

The invention enables the possibility to shift data-intensive transmissions with low urgency to a suitable point in time. The invention will help smoothing the load in radio networks over the day. This allows saving costs, as a potential cell densification, which would be e.g. required to cope with inacceptable peak loads, can be avoided. The invention allows the mobile communication network to deal better with data hungry devices.

The invention is described in the following within the framework of 3GPP LTE, however as the invention is not restricted to 3GPP LTE, but can in principle be applied in other networks that are appropriate for wireless communication, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows exemplarily a method for triggering the transmission of data belonging to an application between a user terminal and a base station using a transmission delay tolerance of said application according to an embodiment of the invention.

Fig. 4 schematically shows exemplarily a method for triggering the transmission of data belonging to an application between a user terminal and a base station using transmission delay tolerances which have been pre-classified dependent on the application according to an embodiment of the invention.

**Description of the embodiments**

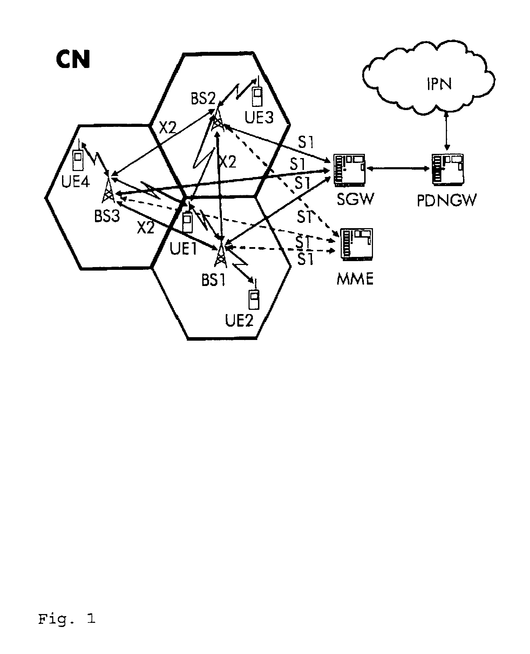

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

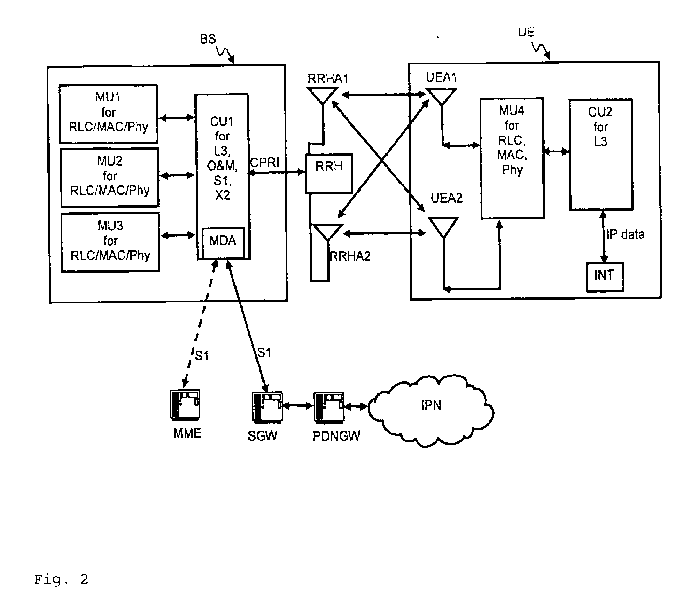

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU1 over the Common Public Radio Interface to the remote radio head RRH and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, a method for the transmission of data between a base station and a user terminal, wherein a point in time for a start of the transmission of said data is determined dependent on a transmission delay tolerance of said data is described according to several embodiments of the invention.

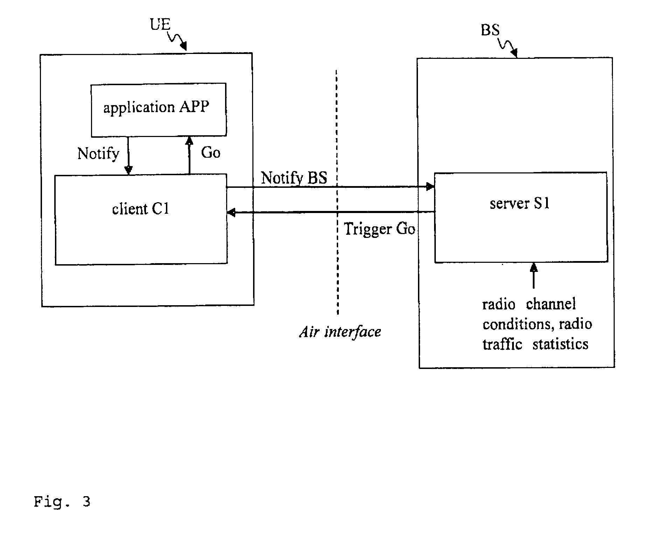

Fig. 3 schematically shows exemplarily a method for triggering the transmission of data belonging to an application between a user terminal and a base station using a transmission delay tolerance of said application according to an embodiment of the invention.

The user terminal UE comprises an application APP and a client C1, which are both software modules that have been installed in the user terminal UE.

The base station BS comprises a server S1 which is a software module that has been installed in the base station BS.

The application APP is connected to the client C1 by an input interface and by an output interface.

The client C1 is connected to the server S1 by an input air interface and by an output air interface.

The server S1 has a further input interface for receiving information about radio channel conditions or radio traffic statistics.

Further functionalities of the user terminal UE and the base station BS are as described above and depicted in fig. 2.

The user terminal UE has a set of applications, one of them is shown in fig. 3 as application APP which shall have a high transmission delay tolerance, as e.g. an application for operation system software updates. Said application APP notifies the local client C1 about its demand for high delay-tolerant data traffic, and the client C1 informs in turn the server S1 located in the base station BS via the output air interface about the demand of the application APP for high delay-tolerant data traffic.

A notification about the transmission delay tolerance of the application APP can be sent via the client C1 to the server S1 in form of a transmission delay tolerance level of said data, an allowed maximum delay for the start of the transmission of said data, or an allowed maximum delay for the end of the transmission of said data. Optionally, the application APP can also inform the server S1 via the client C1 about an amount of data to be transferred.

The server S1 finally decides when the transmission of said data should be performed based on the transmission delay tolerance. The server S1 can e.g. trigger the start of the transmission of data from several applications in the order of the transmission delay tolerance level of said several applications or in the order of the allowed maximum delay for the start of the transmission of data of said several applications.

In a preferred embodiment of the invention, the server S1 uses information available at the base station BS, as e.g. radio conditions and traffic statistics, in order to decide whether it is beneficial to wait or trigger the data transmission. The server S1 takes into account the radio conditions of the cell, as e.g. load, forecast of expected traffic based on statistics etc., and the radio conditions of the user terminal, as e.g. signal to interference and noise ratio (SINR) or channel quality indication (CQI). The server S1 also takes into account available time to wait for good conditions, as e.g. low load or high expected throughput, using also the base station's statistical knowledge of expected data traffic, e.g. based on averaged daily data traffic distribution known from the past. Then, the server S1 finally decides when a transmission of data should be performed based on the radio conditions given above.

Implementation examples in the server S1 for a decision process to trigger the transmission of data are given in the following.

In a first implementation example, the following trigger condition, written in pseudo-code, is regularly checked: IF (load < load_threshold) AND (CQI > minimum_CQI_threshold) THEN Trigger = True

In this trigger condition, load_threshold is an upper limit for the cell load, and minimum_CQI_threshold is a lower limit for the CQI of the user terminal UE.

In case of multiple-input multiple-output (MIMO) multi-rank transmission, there are multiple CQI values, which can be mapped to an expected throughput, e.g. via link level lookup tables. The expected throughput is summed up over all ranks and is remapped back to a single representative virtual CQI value.

In a second implementation example, the following trigger condition, written in pseudo-code, is regularly checked:

```
IF ((alpha * CQI - beta * load) > 0) THEN Trigger = True
```

Here two parameters alpha and beta have to be empirically tweaked in order to find a good appropriate weighted combination for a single criterion, which can be checked for the trigger decision. This allows to emphasize either the cell load or the radio conditions in a joint decision for triggering or no triggering.

In a further embodiment of the invention, if the application APP has given an allowed maximum delay for the start of the transmission of said data, the server S1 can only wait as long as this time limit to start the transmission of said data. After the desired start time, the server S1 must schedule the data for the application APP as standard best effort traffic. Preferably, there should be a default time limit, e.g. 24 hours from now, for applications which do not provide such information about an allowed maximum delay for the start of the transmission of data.

In a yet further embodiment of the invention, if an allowed maximum delay for the end of the transmission of said data is sent via the client C1 to the server S1, the point in time for the start of the transmission of said data is determined dependent on the amount of data to be transmitted and an expected data throughput based on at least one of said at least one radio condition given above.

At a suitable time determined according to a decision process to trigger the transmission of data as described above, the server S1 triggers the client C1, which in turn triggers the application APP, so that classical best effort traffic can start.

According to an embodiment of the invention, the client functionality of client C1 is shifted into the base station, preferably merging the client C1 and the server S1.

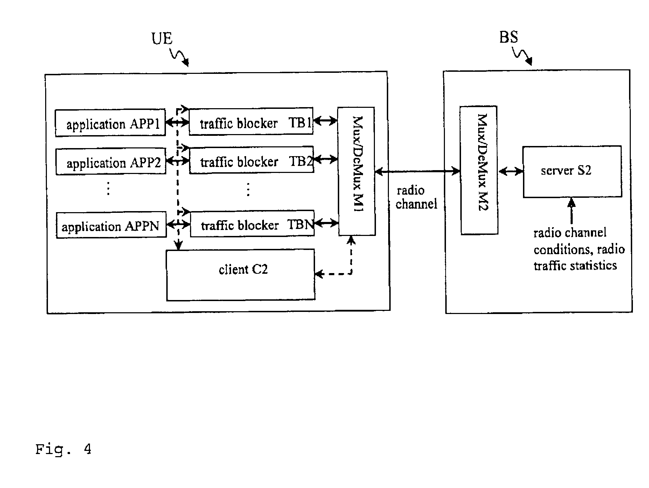

Fig. 4 schematically shows exemplarily a method for triggering the transmission of data belonging to an application between a user terminal and a base station using transmission delay tolerances which have been pre-classified dependent on the application according to an embodiment of the invention.

The user terminal UE comprises several applications APP1-APPN, several traffic blockers TB1-TBN, a multiplexer/demultiplexer M1, and a client C2, which may all be software modules that have been installed in the user terminal UE.

The base station BS comprises a multiplexer/demultiplexer M2, and a server S2, which may both be software modules that have been installed in the base station BS.

Each application APP1-APPN is connected to one of said traffic blockers TB1-TBN, and each traffic blocker TB1-TBN is in turn connected to the multiplexer/demultiplexer M1.

The client C2 is connected to each of said traffic blockers TB1-TBN, and to the multiplexer/demultiplexer M1.

The multiplexer/demultiplexer M1 is connected to the multiplexer/demultiplexer M2 located in the base station BS via a radio channel, and the multiplexer/demultiplexer M2 is in turn connected to the server S2.

The server S2 has a further input interface for receiving information about radio channel conditions or radio traffic statistics.

Further functionalities of the user terminal UE and the base station BS are as described above and depicted in fig. 2.

The user terminal UE depicted in fig. 4 shall have N applications APP1-APPN running which intend to communicate. The first time that one of said N applications APP1-APPN wants to initiate communication, a control application implemented in the client C2 blocks its traffic by means of the respective traffic blocker TB1-TBN in case said one of said N applications APP1-APPN is a high delay-tolerant application, and informs the server S2 located in the base station BS via the radio channel about the intention of the respective application APP1-APPN to communicate.

The traffic blockers TB1-TBN can e.g. perform packet filtering or application-specific filtering. If packet filtering is performed, incoming and outgoing addresses, ports or protocols are inspected. Application-specific filtering can be done e.g. by socket filtering. This means inspecting socket calls for the connections between application layer and the lower layers. Layers here is meant in terms of the Open Systems Interconnection (OSI) model. The socket here provides the application programming interface (API) for the network connection and is responsible for passing and receiving packets. A set of parameters is associated to the socket, like e.g. source identifier, i.e. IP address, source port, destination identifier, destination port. The socket filter itself applies rules to allow or block traffic on a per application process basis.

As described above under fig. 3, the client C2 sends a notification about the transmission delay tolerance of said respective application APP1-APPN to the server S2 in form of a transmission delay tolerance level of said respective application APP1-APPN, an allowed maximum delay for the start of the transmission of said respective application APP1-APPN, or an allowed maximum delay for the end of the transmission of said respective application APP1-APPN. Optionally, said notification can also comprise information about an amount of data to be transferred.

The server S2 decides depending on the transmission delay tolerance, i.e. on the urgency of the respective application APP1-APPN, and preferably depending on the known radio traffic statistics and channel quality information of the user terminal UE, whether it will upkeep the blocking of the traffic for some time. The server S2 can e.g. decide about triggering the start of the transmission of data belonging to said respective application APP1-APPN as described above under fig. 3.

By default, the traffic will not be blocked, but in case the respective application APP1-APPN is known to be high delay-tolerant, either via a specified interface between the respective application APP1-APPN and the control application located in the client C2, or by using some default rules e.g. stored in a table at the user terminal UE, the base station BS or the network, the server S2 can uphold the blocking in case of high load and/or poor channel quality. In said table could e.g. operation system software update be considered to be high delay-tolerant. In this case, the server S2 waits for an appropriate time for allowing the respective applications APP1-APPN to communicate, e.g. when the radio channel quality has improved and/or the traffic load has decreased.

Thus, in case a specified interface between the respective application APP1-APPN and the client C2 used to inform the client C2 on intended high delay-tolerant traffic is not available, using some default rules e.g. stored in a table at the user terminal UE, the base station BS or the network provides an alternative embodiment of the invention.

A pre-classification of available applications is e.g. done into known non time critical applications and the unknown rest which has to be treated as time critical. It is e.g. known that operation system patches can wait a few hours, thus the example application "Windows update" will be classified as non time critical.

The result of the pre-classification can be stored e.g. in the user terminal UE in the client C2 and e.g. be regularly updated by the base station BS.

The base station BS can deal with the demanded traffic like a remote-controlled personal firewall located at the user terminal UE, allowing most applications to communicate and blocking a few for some time, namely those which are highly delay-tolerant.

Thus, the functionality of the control application located in the client C2 is similar to the way a personal firewall on a personal computer deals with outgoing traffic when application-specific filtering is done:

> In a first step, the client C2 continuously monitors the outgoing traffic of the user terminal UE using the connection to the multiplexer/demultiplexer M1 and the client C2 checks whether there is a pre-classified non time critical application which intends to trigger communication using e.g. default rules stored in a table as described above.

The classification into time critical and non time critical application can be done in different ways: Manually controlled by the user, manually controlled by the application vendor/operator and/or based on filtering rules.

Manually controlled by the user means: When an application demands high traffic, e.g. a file download with a large file size, the user terminal user interface offers the user an interaction where the user can decide himself. E.g. a dialogue box appears "You have decided to download a large file. Can this also be done later?" with the possible answers "Yes" and "No". Optionally, as incentive for the user, this traffic is counted in a different way in terms of pricing, e.g. not counted against flat rate traffic volume limits, or in case of non-flat rate with reduced or zero price in case the user answers with "Yes". This information should also be given to the user.

Manually controlled by the application vendor means: The application vendor already provides the information whether its application is non time critical and uses a predefined inter-application API (API = Application Programming Interface) to inform the client on this.

Manually controlled by the operator means that the operator sets up a database, listing up non time critical applications by name, optionally with additional parameters like e.g. port number and protocol. This database can be e.g. on a central server, accessible via IP. Then a base station server application regularly checks for updates of the database and forwards respective information to the client C2.

Based on filtering rules means that certain parameters are checked in a packet or socket filtering way. Based on e.g. source identifier, i.e. IP address, source port, destination identifier, destination port and e.g. file download sizes, a decision is made in the client C2 whether this type of traffic can be classified as non time critical.

In a second step, the client C2 blocks the respective application APP1-APPN using the respective traffic blocker TB1-TBN, not allowing it to communicate in case it is a pre-classified non time critical application.

In a third step, the client C2 informs the server S2 about the intention of the respective application APP1-APPN to communicate, and the server S2 decides depending on the urgency of the respective application APP1-APPN, i.e. on the transmission delay tolerance of the respective application APP1-APPN, and preferably depending on the known radio traffic statistics and channel quality information of the user terminal UE, whether it will upkeep the blocking of the traffic for some time. As an upper time limit for blocking the respective application APP1-APPN cannot be chosen by the respective blocked application APP1-APPN itself, it has to be pre-defined and stored within the server S2.

In a fourth step, once the server S2 has decided to trigger the communication, e.g. as the base station BS is currently in low load, the server S2 notifies the client C2, and the client C2 does not block anymore the communication for the respective application APP1-APPN.

The implementation of the embodiments of the invention described above can be based on a standardized control application for the user terminal UE located in the client C1 C2 with defined interfaces towards the applications APP, APP1-APPN and the base station BS. Alternatively, as a proprietary solution, the control application can be offered as software download or be pre-installed by the operator at the user terminal UE and works in conjunction with the proprietary base station BS software.

## Claims

1. A method for transmission of data between a base station (BS) and a user terminal (UE), wherein a point in time for a start of the transmission of said data is determined dependent on a transmission delay tolerance of said data.

2. A method according to claim 1, wherein said transmission delay tolerance is given in form of at least one of a group of a transmission delay tolerance level of said data, an allowed maximum delay for the start of the transmission of said data, and an allowed maximum delay for the end of the transmission of said data.

3. A method according to any of the preceding claims, wherein said point in time for the start of the transmission of said data is determined dependent on at least one radio condition.

4. A method according to claim 3, wherein said at least one radio condition is at least one of a group of signal to interference and noise ratio, channel quality indication, current traffic load, and forecast on future traffic load.

5. A method according to claim 3 or 4, wherein if an allowed maximum delay for the end of the transmission of said data is given, said point in time for the start of the transmission of said data is determined dependent on an amount of data to be transmitted and an expected data throughput based on at least one of said at least one radio condition.

6. A method according to any of the preceding claims, wherein

    • the user terminal (UE) notifies the base station (BS) about the transmission delay tolerance of said data,
    • the base station (BS) determines said point in time for the start of the transmission of said data,
    • and the base station (BS) triggers the start of the transmission of said data.

7. A method according to claim 6, wherein

    • an application (APP) in the user terminal (UE) notifies a client (C1) about the transmission delay tolerance of said data,
    • said client (C1) notifies a server (S1) located in the base station (BS) about the transmission delay tolerance of said data,
    • said server (S1) determines said point in time for the start of the transmission of said data,
    • and said server (S1) triggers the start of the transmission of said data via said client (C1)

8. A method according to claim 7, wherein said client (C1) is located in the base station (BS).

9. A method according to any of the preceding claims 1 to 6, wherein

    • a pre-classification of the transmission delay tolerance of at least one application (APP1-APPN) is performed,
    • the transmission delay tolerance of said data is determined based on said pre-classification of the transmission delay tolerance,
    • the transmission of said data is blocked if the transmission of said data is delay-tolerant,
    • and the transmission of said data is unblocked if the point in time for the start of the transmission of said data is achieved.

10. A method according to claim 9, wherein

    • the pre-classification of the transmission delay tolerance of at least one application (APP1-APPN) is stored in a client (C2) in the user terminal (UE),
    • the transmission delay tolerance of said data is determined in said client (C2) in the user terminal (UE),
    • the transmission of said data is blocked in a traffic blocker (TB1-TBN) in the user terminal (UE),
    • a server (S2) in the base station (BS) is informed by the client (C2) about the transmission delay tolerance of said data,
    • and the client (C2) in the user terminal (UE) is notified by the server (S2) in the base station (BS) to unblock the transmission of said data.

11. A base station (BS) for transmission of data between said base station (BS) and a user terminal (UE), wherein the base station (BS) comprises at least one processing means which is adapted to determine a point in time for a start of the transmission of said data dependent on a transmission delay tolerance of said data.

12. A user terminal (UE) for transmission of data between said user terminal (UE) and a base station (BS), wherein the user terminal (UE) comprises at least one processing means which is adapted to notify the base station (BS) about a transmission delay tolerance of said data, and to receive a trigger to start the transmission of said data.

13. A communication network (CN) comprising at least one base station (BS1) according to claim 11, and at least one user terminal (UE1) according to claim 12.

Fig. 1

Fig. 2

UE

BS

application APP

Notify | | Go

client C1

Notify BS

Trigger Go

server S1

radio channel
conditions, radio
traffic statistics

*Air interface*

Fig. 3

Fig. 4

# EP 2 530 991 A1

**EUROPEAN SEARCH REPORT**

Application Number

EP 11 29 0247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/095901 A1 (RAJKOTIA PURVA R [US]) 20 May 2004 (2004-05-20) * abstract * * paragraph [0012] - paragraph [0015] * * paragraph [0047] - paragraph [0059] * ----- | 1-13 | INV. H04W72/12 |
| X | EP 1 193 991 A2 (NTT DOCOMO INC [JP]) 3 April 2002 (2002-04-03) * abstract * * paragraph [0016] - paragraph [0022] * * paragraph [0031] - paragraph [0042] * ----- | 1-13 | |
| X | WO 2006/081570 A1 (NORTEL NETWORKS LTD [CA]; CHHEDA ASHVIN [US]; NURIYEV RZA [FR]; PARANC) 3 August 2006 (2006-08-03) * abstract * * page 7, line 11 - page 8, line 15 * * page 11, line 22 - page 14, line 9 * ----- | 1-13 | |
| X | EP 1 335 556 A1 (SIEMENS AG [DE]) 13 August 2003 (2003-08-13) * the whole document * ----- | 1-13 | TECHNICAL FIELDS SEARCHED (IPC) |
| X | WO 00/42789 A1 (ERICSSON TELEFON AB L M [SE]) 20 July 2000 (2000-07-20) * the whole document * ----- | 1-13 | H04W |
| X | US 2003/086439 A1 (LIN JOHN [US] ET AL) 8 May 2003 (2003-05-08) * abstract * * paragraph [0016] - paragraph [0018] * ----- | 1,11-13 | |
| X | US 2002/093930 A1 (DERTZ GREGORY A [US] ET AL) 18 July 2002 (2002-07-18) * paragraph [0017] * * paragraph [0032] - paragraph [0036] * ----- | 1,11-13 | |

The present search report has been drawn up for all claims

| Place of search | Date of completion of the search | Examiner |
|---|---|---|
| Munich | 23 September 2011 | Lombardi, Giuseppe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

13

EP 2 530 991 A1

**ANNEX TO THE EUROPEAN SEARCH REPORT
ON EUROPEAN PATENT APPLICATION NO.**

EP 11 29 0247

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2011

| Patent document cited in search report | | Publication date | Patent family member(s) | | Publication date |
|---|---|---|---|---|---|
| US 2004095901 | A1 | 20-05-2004 | NONE | | |
| EP 1193991 | A2 | 03-04-2002 | CN | 1347201 A | 01-05-2002 |
| | | | DE | 60116451 T2 | 06-07-2006 |
| | | | JP | 3737353 B2 | 18-01-2006 |
| | | | JP | 2002112321 A | 12-04-2002 |
| | | | KR | 20020025772 A | 04-04-2002 |
| | | | SG | 108277 A1 | 28-01-2005 |
| | | | US | 2002037729 A1 | 28-03-2002 |
| WO 2006081570 | A1 | 03-08-2006 | EP | 1849273 A1 | 31-10-2007 |
| | | | US | 2007076651 A1 | 05-04-2007 |
| | | | US | 2010260047 A1 | 14-10-2010 |
| EP 1335556 | A1 | 13-08-2003 | NONE | | |
| WO 0042789 | A1 | 20-07-2000 | AU | 2135100 A | 01-08-2000 |
| | | | CN | 1352862 A | 05-06-2002 |
| | | | EP | 1142376 A1 | 10-10-2001 |
| US 2003086439 | A1 | 08-05-2003 | US | 2007086473 A1 | 19-04-2007 |
| US 2002093930 | A1 | 18-07-2002 | AU | 2002237728 A1 | 30-07-2002 |
| | | | WO | 02058293 A2 | 25-07-2002 |
| | | | US | 2006092910 A1 | 04-05-2006 |

For more details about this annex : see Official Journal of the European Patent Office, No. 12/82

14